# EUROPEAN PATENT SPECIFICATION

(11) **EP 2 518 185 B1**
(45) Date of publication and mention of the grant of the patent: **13.09.2017**
(21) Application number: 10839582.3
(22) Date of filing: 24.12.2010
(51) Int. Cl.: C25B 11/08, C23C 18/02, C25B 1/46

(54) **CATHODE, ELECTROLYTIC CELL FOR ELECTROLYSIS OF ALKALI METAL CHLORIDE, AND METHOD FOR PRODUCING THE CATHODE**
KATHODE, ELEKTROLYSEZELLE ZUR ELEKTROLYSE VON ALKALIMETALLCHLORID UND VERFAHREN ZUR HERSTELLUNG DER KATHODE
CATHODE, RÉCIPIENT ÉLECTROLYTIQUE POUR ÉLECTROLYSE D'UN CHLORURE DE MÉTAL ALCALIN, ET PROCÉDÉ DE FABRICATION DE LA CATHODE

(30) Priority: 25.12.2009 JP 2009295846
(43) Date of publication of application: 31.10.2012
(73) Proprietor: ASAHI KASEI KABUSHIKI KAISHA, Chiyoda-ku Tokyo (JP)
(72) Inventor: FUNAKAWA Akiyasu, Tokyo 101-8101 (JP); HACHIYA Toshinori, Tokyo 101-8101 (JP)
(74) Representative: dompatent von Kreisler Selting Werner - Partnerschaft von Patent- und Rechtsanwälten mbB
(86) International application number: PCT/JP2010/073410
(87) International publication number: WO 2011/078353

(56) References cited:
- WO-A2-2008/043766
- JP-A- 57 013 189
- JP-A- 60 017 087
- JP-A- 61 136 691
- US-A- 3 801 490
- US-A- 4 587 001
- US-A- 4 618 404
- US-A- 5 227 030

## Description

### Technical Field

A cathode of the present invention can be used in electrolysis of water or an aqueous alkali metal compound solution, specifically, suitably used in a brine electrolysis by an ion exchange membrane method.

### Background Art

In electrolysis industry for producing hydrogen, chlorine, caustic soda, and the like by electrolyzing water or an aqueous solution of an alkali metal compound (typically, an alkali metal chloride), reduction in energy consumption, specifically, reduction in electrolysis voltage, is a big problem.

In the ion exchange membrane process, which is a dominant process for electrolyzing an aqueous alkali metal chloride solution such as salt water, the electrolysis voltage is divided into, in addition to the theoretically determined voltage necessary for electrolysis of salt, overvoltage of an anodic reaction (chlorine generation), overvoltage of a cathodic reaction (hydrogen generation), voltage due to resistance of the ion exchange membrane, and voltage due to the electrode-to-electrode distance between the anode and the cathode. Here, the overvoltage refers to a voltage required to feed a certain current, and its value depends on a current value. When the same current is to be fed, an electrode with a lower overvoltage consumes less electric power and has a higher performance.

Conventionally, mild steel, stainless steel, and nickel have been used for a cathode, which has an overvoltage of 300 to 500 mV under normal operation conditions. In order to achieve reduction in cathode overvoltage, improvements of these materials, specifically, increasing the specific surface of the electrode and increasing the area in which an electrode reaction may proceed, have been proposed.

Non Patent Literature 1 discloses a cathode for hydrogen generation in which fine particles of nickel oxide are plasma-sprayed to form a nickel oxide layer on a nickel substrate, thereby increasing the specific surface.

Non Patent Literature 2 discloses a cathode subjected to dispersion-plating with a combination of Raney nickel having a large specific surface with a hydrogen storage alloy.

For further reduction in cathode overvoltage, research has also been conducted on cathodes using platinum metals essentially having a low hydrogen overvoltage. Among platinum metals, especially, platinum is a material having a low hydrogen overvoltage and is electrochemically stable. However, the cathode solely using platinum has problems: platinum is physically separated during electrolysis and the durability is thus low; and platinum is easily poisoned by iron ions included in an electrolytic solution and the electrolysis voltage is thus increased. In order to solve these problems, a variety of methods below are proposed.

Patent Literature 1 discloses a hydrogen-generating cathode made of platinum and a cerium oxide.

Patent Literature 2 discloses a hydrogen-generating cathode made of alloy of platinum and nickel.

Patent Literature 3 discloses a hydrogen-generating cathode formed of platinum and iridium.

Patent Literature 4 discloses a hydrogen-generating cathode formed of an active layer including platinum, and a protective layer including palladium.

US 4 618 404 A (Pellegri Alberto [IT]) 21 October 1986 discloses a cathode for brine electrolysis with improved durability and efficiency, the cathode comprising a conductive substrate and a catalyst layer formed on the conductive substrate, wherein the catalyst layer comprises a first layer located on the conductive substrate, and a second layer located on the first layer. The first layer can include particles of platinum group metal oxides, such as oxides and mixed oxides of at least, for example, platinum and palladium. The second layer can include, for example, iridium and platinum.

US 5 227 030 A (Beaver Richard N [US] et al.) 13 July 1993 discloses a cathode for brine electrolysis with low hydrogen overvoltage and good adhesion, the cathode comprising a conductive substrate and a catalyst layer formed on the conductive substrate, wherein the catalyst layer comprises a first layer located on the conductive substrate, and a second layer located on the first layer. The first layer can include, for example, platinum and palladium and/or platinum dioxide and palladium oxide. The second layer can include, for example, iridium and platinum.

US 4 587 001 A (Cairns John F. [GB] et al.) 6 May 1986 discloses a cathode for brine electrolysis with low hydrogen overvoltage, the cathode comprising a conductive substrate and a catalyst layer formed on the conductive substrate. The catalyst layer comprises a mixture of platinum metal and an oxide of at least one platinum group metal other than platinum, such as iridium oxide.

US 3 801 490 A (Welch C.) 2 April 1974 discloses an intermediate Pt/Pd alloy layer that renders an electrode for the electrolysis of brine resistant to the electrolyte.

### Citation List

### Patent Literature

Patent Literature 1: Japanese Patent Application Laid-Open Publication No. 2000-239882
Patent Literature 2: Japanese Patent Application Laid-Open Publication No. 2005-330575
Patent Literature 3: Japanese Patent Application Laid-Open Publication No. 57-013189
Patent Literature 4: WO2008/043766A

### Non Patent Literature

Non Patent Literature 1: Proceedings of the 20th Soda Industry Technical Discussion Forum, p. 57 (1996)
Non Patent Literature 2: Soda and chlorine, Vol. 45, p. 129 (1994)

### Summary of Invention

### Technical Problem

The cathode associated with hydrogen generation has to be improved as to the problem of suppressing oxidative degradation due to reverse current generated when electrolysis is stopped, in addition to the problem of suppressing hydrogen overvoltage as described above.

In order to solve these problems, various cathodes for hydrogen generation have been proposed so far. However, cathodes for hydrogen generation having a low hydrogen overvoltage and having resistance against reverse current generated when electrolysis is stopped have not yet been obtained.

An object of the present invention is to provide a cathode having a low hydrogen overvoltage in which degradation and peel-off of a catalysis layer is reduced against reverse current generated when electrolysis is stopped, and a method of producing the same.

### Solution to Problem

As a result of elaborate studies on the problems above, the present inventors have found that the problems above can be solved with the following cathode and has completed the invention. The cathode comprises a conductive substrate and a catalyst layer formed on the conductive substrate, wherein the catalyst layer comprises a first layer and a second layer. The first layer at least includes palladium element and platinum element. The second layer at least includes iridium element and platinum element. The first layer is located on the conductive substrate, and the second layer is located on the first layer.

The present invention is as follows:
(1) A cathode comprising a conductive substrate and a catalyst layer formed on the conductive substrate, wherein:
   the catalyst layer comprises a first layer and a second layer,
   the first layer at least includes palladium element and platinum element,
   the second layer at least includes iridium element and platinum element,
   the first layer is located on the conductive substrate, and
   the second layer is located on the first layer;
   wherein the second layer includes iridium oxide and platinum as a simple substance; and
   wherein in an X-ray powder diffraction measurement, a full width at half maximum of a diffraction peak of iridium oxide is 1 or less in an angle region including 2 = 28.
(2) The cathode according to (1), wherein the second layer further includes iridium-platinum alloy.
(3) The cathode according to any one of (1) or (2), wherein the second layer is structured such that iridium oxide supports platinum as a simple substance or iridium-platinum alloy.
(4) The cathode according to any one of (1) to (3), wherein the first layer includes platinum as a simple substance.
(5) The cathode according to any one of (1) to (4), wherein the first layer includes palladium oxide and/or palladium as a simple substance.
(6) The cathode according to any one of (1) to (5), wherein a thickness of the first layer is 0.01 m to 5 m, and a thickness of the second layer is 0.01 m to 5 m.
(7) The cathode according to any one of (1) to (6), wherein the conductive substrate includes nickel.
(8) The cathode according to any one of (1) to (7), wherein the first layer includes an alloy of palladium and platinum, or platinum as a simple substance and palladium as a simple substance.
(9) An electrolytic cell for electrolysis of an alkali metal chloride, comprising the cathode according to any one of (1) to (8).
(10) A method for producing a cathode as defined in (1), said method comprising:
   a coating step of applying a first coating liquid including a palladium compound and a platinum compound, onto a conductive substrate;
   a film formation step of forming a coating film by drying the first coating liquid;
   a thermal decomposition step of heating and thermally decomposing the coating film to form a first layer, and thereafter;
   a coating step of applying a second coating liquid including an iridium compound and a platinum compound, onto the first layer;
   a film formation step of forming a coating film by drying the second coating liquid; and
   a thermal decomposition step of heating and thermally decomposing the coating film at a temperature of 470 °C or higher and 550 °C or lower to form a second layer.
(11) The method for producing a cathode according to (10), wherein the first coating liquid and the second coating liquid include an organic acid having a valence of two or more and an organic compound having two or more hydroxyl groups.
(12) The method for producing a cathode according to (10) or (11), wherein in the thermal decomposition step, a rate of temperature increase from a drying temperature in the film formation step to a heating temperature in the thermal decomposition step is 10C/min to 1500C/min.
(13) The method for producing a cathode according to any one of (10) to (12), wherein a cycle including the coating step, the film formation step, and the thermal decomposition step is repeated twice or more to form the first layer and/ or the second layer.
(14) The method for producing a cathode according to any one of (10) to (13), wherein post-heating is performed after forming the second layer.
(15) The method for producing a cathode according to any one of (10) to (14), further comprising an electrolysis step of electrolyzing after forming the second layer.
(16) The method for producing a cathode according to any one of (10) to (15), wherein the palladium compound in the first coating liquid is palladium forming an ammine complex or a nitrate of palladium, and
   the platinum compound in the first coating liquid is a platinum compound forming an ammine complex.
(17) The method for producing a cathode according to any one of (10) to (16), wherein the iridium compound in the second coating liquid is a chloride of iridium, and
   the platinum compound in the second coating liquid is a chloride or platinum forming an ammine complex.

### Advantageous Effects of Invention

The present invention provides a cathode having a low hydrogen overvoltage, good durability, and high resistance to reverse current generated when electrolysis is stopped, in electrolysis of an aqueous solution of an alkali metal compound. The cathode of the present invention can be suitably used in a zero-gap electrolytic cell.

### Brief Description of Drawings

[Fig. 1] Fig. 1 shows an X-ray diffraction pattern before electrolysis of a cathode obtained in Example 1, where the abscissa axis represents a diffraction angle (2θ) and the ordinate axis represents intensity
[Fig. 2] Fig. 2 shows X-ray diffraction patterns in the vicinity of 2θ = 28° of cathodes before electrolysis obtained in Examples 1 to 11, where the abscissa axis represents a diffraction angle (2θ) and the ordinate axis represents intensity.
[Fig. 3] Fig. 3 shows X-ray diffraction patterns in the vicinity of 2θ = 28° of cathodes before electrolysis obtained in Comparative Examples 1 to 3, where the abscissa axis represents a diffraction angle (2θ) and the ordinate axis represents intensity.
[Fig. 4] Fig. 4 shows X-ray diffraction patterns before and after electrolysis of the cathode obtained in Example 1, where the abscissa axis represents a diffraction angle (2θ) and the ordinate axis represents intensity.
[Fig. 5] Fig. 5 is a cross-sectional schematic diagram of a cathode according to an embodiment of the present invention.
[Fig. 6] Fig. 6 is a cross-sectional schematic diagram of an electrolytic cell for electrolysis according to an embodiment of the present invention.

### Description of Embodiments

An embodiment for carrying out the invention (hereinafter simply referred to as "the present embodiment") will be described below in detail.

### <Cathode Overview>

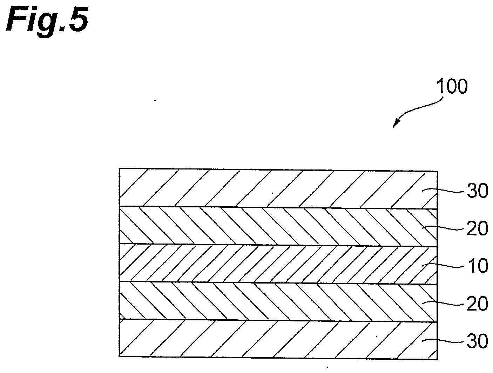

Fig. 5 is a cross-sectional schematic diagram of a cathode 100 according to an embodiment. In the cathode 100 in the present embodiment, a first layer 20 including palladium element and platinum element is formed on a conductive substrate 10, and a second layer 30 including iridium element and platinum element is formed on the first layer 20. The first layer 20 and the second layer 30 may be stacked on only one surface of the conductive substrate 10. In the following, in the present embodiment, the first layer and the second layer are collectively called a catalyst layer.

In the cathode in the present embodiment, a catalyst layer is formed on a conductive substrate. Examples of the conductive substrate used include nickel, nickel alloys, stainless steel, and the like. Preferably, the conductive substrate includes nickel. Nickel is preferred because it is not eluted and is stable in a high-concentration aqueous alkali solution, and has a low electrical conductivity.

Any appropriate shape can be selected as the shape of the conductive substrate, according to the purpose. Specific examples of the shape of the conductive substrate include a porous plate, an expanded shape, and a woven mesh prepared by weaving nickel wires.

Here, the shape of the conductive substrate is suitably determined depending on the distance between an anode and a cathode in an electrolytic cell. For example, in a case where there is a finite distance between an anode and a cathode, a porous plate or an expanded shape is used. In a case of a zero-gap electrolytic cell in which an ion exchange membrane is in contact with an electrode, a woven mesh formed by weaving thin wires is used.

Preferably, asperity is formed on the surface of the conductive substrate. The formation of asperity on the surface of the conductive substrate improves adhesion to the catalyst layer formed on the surface and improves durability of the catalyst. In addition, the surface area of the conductive substrate is increased, so that the use efficiency of the catalyst formed on the surface is improved. The depth (height) of the asperity on the surface of the conductive substrate is expressed by an arithmetic mean roughness Ra, a maximum height Ry, and a ten-point average roughness Rz. Ra is preferably 0.01 µm to 1 µm. Ry is preferably 0.01 µm to 20 µm. Rz is preferably 0.01 µm to 20 µm. Examples of a method of forming asperity on the surface of the conductive substrate include a method of forming asperity using a steel grid, alumina powder, and the like and a method of performing acid treatment on the surface of the conductive substrate. These methods may be combined.

In the present embodiment, the first layer includes palladium element and platinum element. As long as the first layer includes palladium element and platinum element, the first layer may include palladium element and platinum element in the form of a simple substance, a compound, a solid solution, an alloy, and the like. The first layer including palladium element and platinum element has a high affinity to the conductive substrate such as nickel. Therefore, even when undergoing various electrolysis histories, the first layer can be prevented from being separated. Here, electrolysis history means that an electrode comes into a state in which a hydrogen generation reaction is in progress (normal use condition), a state in which the electrode is subjected to a higher potential than a hydrogen generation potential when the electrolytic cell is stopped, and a state in which an oxygen generation reaction proceeds.

Preferably, the first layer includes platinum as a simple substance. More preferably, the first layer includes palladium oxide and/or palladium as a simple substance. The first layer including platinum as a simple substance has affinity to the conductive substrate such as nickel and also has a high affinity to iridium included in the second layer. Therefore, the conductive substrate, the first layer, and the second layer can be strongly adhered to each other with the first layer including platinum as a simple substance. It is preferable that the first layer include palladium as a simple substance and/or palladium oxide. Accordingly, the affinity of the first layer to the conductive substrate such as nickel is increased, and platinum in the first layer is stabilized. The first layer may include a mixture of palladium as a simple substance and palladium oxide or may partially include an alloy of palladium and platinum.

It is preferable that the first layer include an alloy of palladium and platinum, or platinum as a simple substance and palladium as a simple substance because its resistance against iron ions is improved. When interacting with platinum, iron ions, which are impurities in electrolytic solution, may be reduced to coat the surface of the catalyst layer of the cathode, thereby increasing overvoltage.

The inclusion of an alloy of palladium and platinum, platinum as a simple substance and palladium as a simple substance in the first layer is thought to suppress the interaction between platinum and iron ions and to suppress deposition of iron ions, thereby preventing the overvoltage increase.

It is preferable that the first layer have a smooth surface structure. In this case, even when undergoing electrolysis history such as electrolysis and reverse electrolysis, the surface smoothness is kept, and the surface shape of the first layer thus does not change. In other words, because of the structure above, a more stable layer is formed. Therefore, the durability of the cathode is improved.

In the present embodiment, the second layer includes iridium element and platinum element. As long as the second layer includes iridium element and platinum element, the second layer may include iridium element and platinum element in the form of a simple substance, a compound, a solid solution, an alloy, and the like.

The second layer includes iridium oxide and platinum as a simple substance. Iridium oxide is an electrochemically stable material that does not dissolve nor change its structure at potentials from the hydrogen generation potential to the oxygen generation potential. Therefore, the inclusion of iridium oxide in the second layer is preferred because the catalyst layer is stabilized.

It is preferable that the second layer include an alloy of iridium and platinum (hereinafter referred to as iridium-platinum alloy) in addition to iridium oxide and platinum as a simple substance. The inclusion of iridium-platinum alloy in the second layer improves bond between iridium and platinum and improves the durability of the catalyst layer.

It is preferable that the second layer include an alloy of iridium and platinum, or platinum as a simple substance and iridium as a simple substance because its resistance against iron ions is improved. When interacting with platinum, iron ions, which are impurities in electrolytic solution, may be reduced to coat the surface of the catalyst layer of the cathode, thereby increasing overvoltage. Then, the inclusion of an alloy of iridium and platinum, or platinum as a simple substance and iridium as a simple substance in the second layer is thought to suppress the interaction between platinum and iron ions and to suppress deposition of iron ions, thereby preventing the overvoltage increase.

More preferably, the second layer is structured such that an iridium oxide particle forms a framework, and platinum as a simple substance or iridium-platinum alloy is supported on the surface thereof. With this structure, the surface areas of platinum as a simple substance and iridium-platinum alloy as main catalyst components are increased. In general, reduction of hydrogen overvoltage depends on the surface area of the catalyst supported on the cathode. Therefore, the structure above can be adopted to reduce the hydrogen overvoltage with a small amount of platinum. In addition, iridium-platinum alloy is formed between iridium oxide particles to strengthen the bond between the iridium oxide particles. The strengthened bond between iridium oxide particles serving as the framework of the second layer can suppress peel-off of the main catalyst component due to hydrogen generation electrolysis and can also suppress peel-off of the catalyst component due to reverse current. As a result, the durability of the cathode is improved, and the duration of use is increased.

In the present embodiment, in X-ray powder diffraction measurement, the full width at half maximum of the diffraction peak of iridium oxide in an angle region including 2θ = 28° is 1° or less. Preferably, the full width at half maximum is 0.55° or less, and further preferably, it is 0.5° or less. Here, in the X-ray powder diffraction measurement, a small full width at half maximum of the diffraction peak means that the crystallinity is high.

The high crystallinity of iridium oxide included in the second layer is preferred because the durability of the catalyst layer is improved. This is because the iridium oxide particles are stably present because of the high crystallinity, so that reduction in the amount of the catalyst layer due to electrolysis or reverse electrolysis is prevented, and, as a result, the durability of the cathode is improved. In addition, the high crystallinity of iridium oxide is also preferred because the surface area of iridium oxide is increased, and the efficiency of platinum and iridium-platinum alloy as the main catalyst components supported thereon is improved.

Although the lower limit of the full width at half maximum is not specifically limited, the full width at half maximum is preferably 0.01° or more in order to keep good dispersiveness of iridium oxide and platinum and to facilitate formation of iridium-platinum alloy. More preferably, the full width at half maximum is 0.1° or more.

The X-ray diffraction peak in the X-ray powder diffraction measurement in this description can be measured by the following method. An X-ray powder diffractometer (for example, Ultra X18, manufactured by Rigaku Corporation) with CuKα radiation (λ = 1.54184 Å) can be used in measurement under the following conditions: acceleration voltage of 50 kV, acceleration current of 200 mA, scanning axis of 2θ/θ, step interval of 0.02°, scanning speed of 2.0 °/min, and measurement range 2θ = 20° to 60°. The full width at half maximum can be calculated with analysis software included in the X-ray diffractometer.

It is preferable that platinum in the catalyst layer include amorphous platinum. In the present embodiment, amorphous platinum means platinum in which a clear platinum peak is not observed in X-ray diffraction.

In the cathode before electrolysis, it is preferable that the second layer include amorphous platinum. In the cathode comprising the second layer including iridium oxide particles and amorphous platinum, amorphous platinum is reduced by electrolysis to form iridium-platinum alloy well. Therefore, the durability of the catalyst is improved.

In the cathode before electrolysis, it is preferable that the first layer includes amorphous platinum. The cathode comprising the first layer including amorphous platinum is preferred because palladium and platinum are present uniformly, and thus, the overvoltage is reduced more, thereby improving the durability of the catalyst. Based on that a diffraction peak of Pt is not clearly present when electrolysis is carried out, the amorphous platinum is thought to be reduced to form a small crystal of platinum or an alloy of palladium and platinum.

In the cathode in the present embodiment, current is applied during use for electrolysis of an alkali metal compound. When current is applied, a reduction reaction occurs in the first layer, and alloying due to reduction occurs in the second layer. More specifically, in the case of the cathode in which, at a stage before application of current, palladium oxide and platinum as a simple substance are included in the first layer, and iridium oxide and platinum as a simple substance are included in the second layer, palladium oxide is reduced in the first layer, and iridium-platinum alloy is formed in the second layer when current is applied. An alloy of palladium and platinum may be partially formed in the first layer.

That is, before application of current, palladium element included in the first layer may be palladium oxide or may be palladium as a simple substance. It follows that the inclusions in the second layer before application of current is iridium oxide and platinum as a simple substance or may be iridium-platinum alloy in addition to iridium oxide and platinum as a simple substance. Therefore, the reduced palladium and iridium-platinum alloy may be formed beforehand by electrolysis of the catalyst layer during production of the cathode for hydrogen generation, or may be formed during electrolysis of an alkali metal compound during use after production of the cathode for hydrogen generation, or may be formed in the both methods described above.

The cathode in the present embodiment is characterized in that the first layer is located on the conductive substrate and the second layer is located on the first layer.

It has been found that the layer including palladium element and platinum element in which the resistance of the catalyst against reverse current (hereinafter referred to as "reverse current resistance") is high is provided not at the top of the catalyst layer but under the layer including iridium element and platinum element, whereby the cathode exhibits a higher reverse current resistance than a cathode only comprising a layer including palladium element and platinum element. In a case of a cathode comprising a reverse of the stack structure of the present invention, the reverse current resistance is significantly reduced. One of the factors is thought to be that the second layer including iridium and platinum has a lower affinity to the conductive substrate such as nickel than the first layer including palladium and platinum.

In addition, the stack structure above of the catalyst layer improves the resistance to iron ions. In general, the catalyst layer formed of only platinum is easily poisoned by iron ions, and therefore, the hydrogen overvoltage is easily increased. However, a combination of platinum with other metal inhibits the interaction between platinum and iron ions thereby suppressing an increase of hydrogen overvoltage. In the present invention, the resistance to iron ions is high because platinum is combined with iridium or palladium. Furthermore, the stack structure above of the catalyst layer further improves the resistance to iron ions.

Here, iron ions are produced in being eluted from stainless steel that forms the catholyte pipe. Specifically, iron ions are gradually eluted from the catholyte pipe and the like due to caustic soda during electrolysis, and iron ions are supplied as electrolytic solution to the cathode chamber. The iron ions are sometimes included in electrolytic solution, and if iron ions are included in salt water supplied to the anode chamber, the iron ions permeate through the ion exchange membrane and are supplied to the cathode chamber. Therefore, it is preferable that the cathode have especially high durability against iron ions.

Preferably, the ratio of the number of moles of platinum element to the total number of moles of palladium element and platinum element present in the first layer in the catalyst layer (Pt / (Pd + Pt)) is 10 to 90 atm%. More preferably, the ratio is 20 to 90 atm%, and further preferably 40 to 90 atm%.

Preferably, the ratio of the number of moles of platinum element to the total number of moles of iridium element and platinum element present in the second layer (Pt / (Ir + Pt)) is 20 to 50 atm%. When the ratio is 20 atm% or more, the amount of iridium-platinum alloy formed through electrolysis is large, so that reduction of the catalyst layer due to electrolysis can be well suppressed. When the ratio is 50 atm% or less, the amount of iridium oxide as a framework is kept well, so that reduction of the catalyst layer due to electrolysis can be suppressed more. The ratio (Pt / (Ir + Pt)) is more preferably 20 to 45 atm%.

The thickness of the catalyst layer (the total thickness of the first layer and the second layer) is preferably 0.1 µm to 10 µm, and further preferably 0.5 µm to 3 µm. The greater is the thickness of the catalyst layer, the longer is the period during which a low overvoltage can be kept. However, the range above is preferred from an economic standpoint. The thickness of the first layer is preferably 0.01 µm to 5 µm, and the thickness of the second layer is preferably 0.01 µm to 5 µm.

The thickness of the catalyst layer can be measured by observing the cross section of the cathode using an electron microscope. Specifically, the cross section of the cathode is observed with an electron microscope, and the average value of the measurement values of the thickness of the catalyst layer at five points is considered as the thickness of the catalyst layer. The thickness of each layer can be measured by observing each layer with an electron microscope after the layer is formed on the conductive substrate.

The cathode of the present embodiment has the first layer between the second layer and the conductive substrate, whereby the thickness of a high-cost catalyst layer can be reduced with a low overvoltage.

### <Overview of Method of Producing Cathode>

The cathode of the present embodiment can be produced in any method that can form, as a catalyst layer, a layer including palladium element and platinum element and a layer including iridium element and platinum element, on a conductive substrate. Specifically, a variety of known methods including thermal decomposition, electrolytic plating, electroless plating, dispersal plating, vapor deposition, and plasma spraying processes can be applied. Among them, a thermal decomposition process is preferred from the viewpoint of industrial productivity. The preferable aspects of producing the cathode of the present embodiment by the thermal decomposition process will be explained below.

The method of producing the cathode of the present embodiment is characterized by comprising a coating step of applying a first coating liquid including a palladium compound and a platinum compound, onto a conductive substrate, a film formation step of forming a coating film by drying the first coating liquid, a thermal decomposition step of heating and thermally decomposing the coating film thereby forming a first layer, and thereafter, a coating step of applying a second coating liquid including an iridium compound and a platinum compound, onto the first layer, a film formation step of forming a coating film by drying the second coating liquid, and a thermal decomposition step of heating and thermally decomposing the coating film thereby forming a second layer.

### <Coating Step>

In the coating step for forming the first layer, a first coating liquid including a palladium compound and a platinum compound is applied on a conductive substrate. In the coating step for forming the second layer, a second coating liquid including an iridium compound and a platinum compound is applied on the first layer. A variety of known methods can be used as a method of applying the coating liquid (hereinafter the first coating liquid and the second coating liquid are collectively referred to as the coating liquid). Preferred methods include a dipping method of dipping the conductive substrate in the coating liquid, a method of painting the coating liquid on the conductive substrate with a brush, a roll method of applying the coating liquid immersed in a sponge-like roll on the conductive substrate, and an electrostatic application method of charging the coating liquid and the conductive substrate to opposite charges and spraying using a spray or the like. In particular, the roll method and the electrostatic application method are preferably used in terms of productivity and because the catalyst layer can be applied uniformly.

### <Film Formation Step>

In the film formation step, a coating film is formed by drying the coating liquid. In the film formation step in either of the first layer and the second layer, drying is preferably performed at 200°C or lower. If the drying temperature exceeds 200°C, the solvent of the applied coating liquid rapidly vaporizes, so that the resultant catalyst layer becomes porous, and peel-off of the catalyst layer during electrolysis tends to increase. The drying time is preferably 5 to 30 minutes although not specifically limited thereto.

### <Thermal Decomposition Step>

In the thermal decomposition step, the coating film is heated and thermally decomposed (that is, calcination). The thermal decomposition is performed, for example, in the air atmosphere using an electric furnace or the like.

The heating temperature for forming the first layer is preferably 400°C or higher and 600°C or lower. If 400°C or higher, the thermal decomposition of the palladium compound and the platinum compound proceeds well. If 600°C or lower, the conductive substrate such as nickel or a nickel alloy is not softened. More preferably, the heating temperature is 400°C or higher and 550°C or lower.

The heating temperature for forming the second layer is preferably 450°C or higher and 600°C or lower. The temperature of 450°C or higher is preferred because the thermal decomposition of the second layer proceeds well. The temperature of 600°C or lower is preferred because the conductive substrate such as nickel or a nickel alloy is not softened. More preferably, the heating temperature is 470°C or higher and 550°C or lower.

In particular, in a case where the iridium compound included in the second coating liquid is iridium chloride whose thermal decomposition temperature is about 450°C, it is preferable to perform thermal decomposition at 470°C or higher, that is, at a temperature higher than the temperature above, because the crystallinity of iridium oxide is improved.

The heating time is not limited as long as thermal decomposition of the coating film can be completed. The heating time is preferably about 1 to 60 minutes, further preferably 5 to 30 minutes.

The thermal decomposition step is preformed following the film formation step. The rate of temperature increase from the drying temperature in the film formation step to the heating temperature in the thermal decomposition step is preferably 10 °C/min to 1500 °C/min. If the temperature increase rate is less than 10 °C/min, the crystalline growth of iridium oxide does not proceed well, and the durability tends to become low. On the other hand, if the temperature increase rate exceeds 1500 °C/min, crystallization proceeds abruptly, and, as a result, the catalyst layer tends to be bristle because of poor coupling between crystals. In this manner, a cathode with higher durability can be produced by controlling the temperature increase rate in the thermal decomposition step. More preferably, the temperature increase rate is 50 °C/min to 500 °C/min.

In forming each layer, preferably, a cycle consisting of the coating step, the film formation step, and the thermal decomposition step is repeated several times. In order to form a catalyst layer having a desired thickness, the amount of one application of the coating liquid may be increased, or the concentration of the compound in the coating liquid may be increased. However, this may cause unevenness, and each layer cannot be formed uniformly. Therefore, the cycle is repeated several times so that a more uniform catalyst layer having a desired thickness can be formed. The number of times of repetition for the first layer is preferably 1 to 10, more preferably 2 to 6. The number of times of repetition for the second layer is preferably 1 to 15, more preferably 2 to 10.

### <Post-Heating Step>

It is preferable to perform post-heating on the coating film after forming the second layer in order to perform thermal decomposition of the coating film more completely. This further improves the crystallinity of iridium oxide and stabilizes the catalyst layer more. In the present embodiment, post-heating means that the cathode is heated again after the second layer is formed through the thermal decomposition step. Post-heating may be performed in the air but may be performed in an inert gas atmosphere as necessary. The temperature in post-heating is preferably 350°C to 600°C, more preferably in a range from 400°C to 550°C. Alternatively, the temperature in post-heating may be a temperature similar to the temperature during thermal decomposition of the second layer described above, that is, 470 to 600°C.

It is preferable that the duration of post-heating be long because, with a short duration of post-heating of the coating film, further thermal decomposition of the coating film does not proceed well. However, in light of productivity, the duration of post-heating is preferably five minutes to three hours, further preferably ten minutes to one hour.

### <Electrolysis Step>

It is preferable to electrolyze the coating film after the thermal decomposition step, after forming the second layer. This electrolysis step may be performed in the process of producing the cathode or may be performed during the actual use of the cathode (electrolysis of an alkali metal compound). In the case where the electrolysis step is performed during production of the cathode, as a specific example of the manner and conditions of electrolysis, electrolysis is preferably performed in an aqueous solution of 32 mass% caustic soda, at a current density of 0.1 to 12 kA/m², for a period of time during which progress of the hydrogen generation reaction from the electrode can be observed.

Through the electrolysis step above, palladium oxide may be reduced to form a layer having a smooth surface in the first layer. Accordingly, the first layer becomes more stable because palladium and platinum are present more uniformly and because an alloy of palladium and platinum is formed. Accordingly, even when undergoing reverse current generated when electrolysis is stopped, the catalyst layer hardly changes its structure. Oxidative degradation of the cathode can thus be avoided.

In addition, in the second layer, formation of iridium-platinum alloy is promoted through the electrolysis step, and bond between particles of iridium oxide serving as a framework is strengthened. Accordingly, peel-off of the catalyst due to electrolysis is suppressed, resulting in high durability. The formation of iridium-platinum alloy avoids oxidative degradation of the catalyst layer due to reverse current generated when electrolysis is stopped, and suppresses peel-off of the catalyst, resulting in a cathode highly resistant to reverse current.

### <Coating Liquid>

The coating liquids used in the method of producing the cathode of the present embodiment are the first coating liquid including a palladium compound and a platinum compound for the first layer and the second coating liquid including an iridium compound and a platinum compound for the second layer.

Examples of the palladium compound included in the first coating liquid include a solution of nitrate, ammine complex, chloride, or the like of palladium. Examples of the platinum compound included in the first coating liquid include a solution of dinitrodiammine complex, tetraammine complex, hexaammine complex, chloride, or the like of platinum.

More preferably, the palladium compound is a solution of palladium nitrate, and the platinum compound solution is a solution of dinitrodiammine platinum. The palladium compound and the platinum compound each may be a combination of two or more compounds. The solvent of the solution may be water, an organic solvent such as alcohol, or a mixture thereof. Water is preferred.

On the other hand, examples of the iridium compound solution included in the second coating liquid include a solution of chloride, nitrate, hexaammine complex, or the like of iridium. Examples of the platinum compound solution included in the second coating liquid include a solution of chloride, dinitrodiammine complex, tetraammine complex, hexaammine complex, or the like.

More preferably, the iridium compound solution is an iridium chloride solution, in that an iridium concentration can be increased. More preferably, the platinum compound solution is a dinitrodiammine platinum solution or a chloroplatinic acid solution. Further preferably, the platinum compound solution is a dinitrodiammine platinum nitric acid solution in view of easiness of formation of an alloy of iridium and platinum. The iridium compound and the platinum compound each may be a combination of two or more compounds. The solvent of the solution may be water, an organic solvent such as alcohol, or a mixture thereof. Water is preferred.

The ratio of the number of moles of platinum element to the total number of moles of palladium element and platinum element (Pt / (Pd + Pt)) in the first coating liquid is preferably 10 to 90 atm%. More preferably, the ratio is 20 to 90 atm%, further preferably 40 to 90 atm%.

The ratio of the number of moles of platinum element to the total number of moles of iridium element and platinum element (Pt / (Ir + Pt)) in the coating liquid used to form the second layer is preferably 20 to 50 atm%. More preferably, the ratio is 20 to 45 atm%.

When the ratio of the coating liquid used to form the second layer is 20 atm% or more, the amount of iridium-platinum alloy formed by electrolysis is large, and reduction of the catalyst layer due to electrolysis can be suppressed better. If the ratio is 50 atm% or less, the amount of iridium oxide serving as a framework can be kept well, and reduction of the catalyst layer due to electrolysis can be suppressed better.

The total concentration of palladium element, iridium element, and platinum element present in the coating liquid is, though not specifically limited, preferably in a range of 10 g/L to 200 g/L, further preferably in a range of 20 g/L to 150 g/L, in consideration of the thickness per application of the coating liquid. More preferably, it is in a range of 30 g/L to 120 g/L.

In the method of producing the cathode of the present embodiment, it is preferable to use a coating liquid (A) or a coating liquid (B) as follows.

In the coating liquid (A), the first coating liquid is a mixture of a palladium compound and a platinum compound, and the second coating liquid is a mixture of an iridium compound solution and a platinum compound solution. The coating liquid (A) is a coating liquid that does not include an organic acid or an organic compound described later.

The coating liquid (B) will now be described below. The coating liquid (B) is prepared by adding an organic acid having a valence of two or more and an organic compound having two or more hydroxyl groups to be subjected to an esterification reaction with the organic acid, to a solution including a palladium compound and a platinum compound or an iridium compound and a platinum compound. If the organic acid or the organic compound is solely used, the amount of mass reduction of the catalyst layer due to reverse current is increased, and the effect of the present invention tends to be low Therefore, it is preferable to use a combination of the organic acid and the organic compound.

Preferably, the organic acid typically has a functional group for stabilizing a metal cation by forming a chelate complex with the metal cation. Examples of the functional group include a hydroxyl group, a carboxyl group, and an amino group.

The organic compound causes an esterification reaction with a functional group having acidic property in the organic acid (for example, a hydroxyl group, a carboxyl group, and an amino group) successively to form a polymer. A palladium compound and a platinum compound, and an iridium compound and a platinum compound are chelated, dispersed and stabilized in this polymer.

By thermally decomposing the polymer including the highly dispersed and stabilized palladium compound and platinum compound or iridium compound and platinum compound, a layer having a smooth surface can be easily obtained in the first layer, and a layer having a stable crystalline structure in which iridium-platinum alloy is partially formed can be easily obtained in the second layer. When the cathode is produced using the coating liquid (B), iridium-platinum alloy is formed not only in the electrolysis step but also in the thermal decomposition step.

In the case where the coating liquid including the organic acid and the organic compound is used, the kinds of the organic acid and the organic compound are not specifically limited, and any organic acid and any organic compound having two or more hydroxyl groups for causing an esterification reaction with the organic acid may be used.

Examples of the organic acid include citric acid, isocitric acid, malic acid, tartaric acid, ethylenediamine tetra-acetic acid, glycerol, and the like.

The hydroxyl group in the organic compound may be either an alcoholic hydroxyl group or a phenolic hydroxyl group. More specifically, examples of the organic compound include alcohol having a valence of two or more, ethylene glycol, diethylene glycol, propylene glycol, 1,3-propanediol, 1,2-butanediol, 1,3-butanediol, 1,4-butanediol, 2,3-butanediol, catechol, resorcinol, hydroquinone, and the like.

In order to achieve the effect of the present invention well, the content of the organic acid in the second coating liquid is preferably in a range of 0.01 to 1 in molar ratio when the total number of moles of iridium and platinum is 1. When the molar ratio is 0.01 or more, the effect of the present invention is superior, and when the molar ratio is 1 or less, decrease in physical strength due to many voids generated in the catalyst layer can be suppressed. The molar ratio is more preferably in a range of 0.02 to 0.9, and further more preferably in a range of 0.05 to 0.8.

The content of the organic acid and the organic compound in the coating liquid is preferably in a range of 0.01 to 2 in molar ratio when the total number of moles of palladium element and platinum element or iridium element and platinum element is 1. When the molar ratio is 0.01 or more, the effect of the present invention is superior, and when the molar ratio is 2 or less, decrease in physical strength due to many voids generated in the catalyst layer can be suppressed. The molar ratio is more preferably in a range of 0.02 to 1.5, further preferably in a range of 0.05 to 1, and especially preferably in a range of 0.05 to 0.5.

With the production method as described above, it is possible to produce a cathode that is suitable for the application to electrolysis of an aqueous alkali metal chloride solution, has a low hydrogen overvoltage, is highly durable, and is highly resistant to reverse current generated when electrolysis is stopped and resistant to iron ions in electrolytic solution.

### <Electrolytic Cell for Electrolysis>

The present embodiment also provides an electrolytic cell comprising the cathode of the present embodiment, for electrolysis of water or an alkali metal compound (in particular, an alkali metal chloride). As a configuration of the electrolytic cell for electrolysis, a configuration common to those skilled in the art can be adopted. The electrolytic cell for electrolysis typically comprises an electrolytic solution, a container for accommodating the electrolytic solution, an anode and a cathode immersed in the electrolytic solution, an ion exchange membrane separating an anode chamber and a cathode chamber from each other, and a power source for connecting the electrodes. The cathode of the present invention described above is used as the cathode.

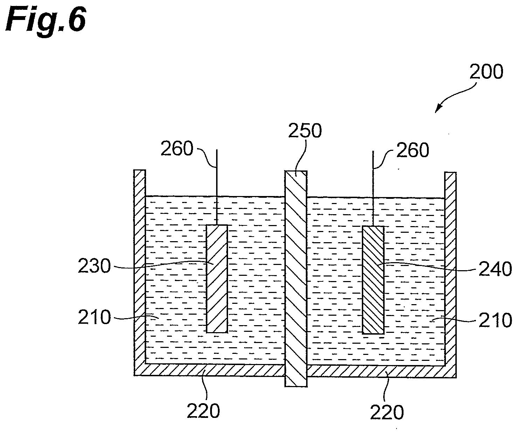

Fig. 6 is a cross-sectional schematic diagram of an electrolytic cell 200 for electrolysis according to the present embodiment. The electrolytic cell 200 for electrolysis includes an electrolytic solution 210, a container 220 for accommodating the electrolytic solution 210, an anode 230 and a cathode 240 immersed in the electrolytic solution 210, an ion exchange membrane 250, and wiring 260 for connecting the anode 230 and the cathode 240 to a power source. The electrolytic cell 200 for electrolysis is divided by the ion exchange membrane 250 into a space on the anode side, which is called an anode chamber, and a space on the cathode side, which is called a cathode chamber.

Examples of the electrolytic solution 210 used in the anode chamber include an aqueous sodium chloride solution (salt water) and an aqueous potassium chloride solution. Examples of the electrolytic solution 210 used in the cathode chamber include an aqueous sodium hydroxide solution and an aqueous potassium hydroxide solution. As the material of the anode, for example, a material called DSA (Dimensionally Stable Anode) can be used, in which ruthenium oxide, iridium oxide and titanium oxide are formed on a titanium substrate. As the ion exchange membrane, for example, "Aciplex" (registered trademark) F6801 (manufactured by Asahi Kasei Chemicals Corporation) or the like can be used. The electrolytic cell 200 for electrolysis of the present embodiment does not require a device for preventing reverse current because it includes the cathode 240 having superior resistance to reverse current. Therefore, the electrolytic cell 200 for electrolysis having the cathode 240 of the present embodiment makes electrolysis operation very easy.

### Examples

The present embodiment will be described in more detail based on Examples. However, the present embodiment is not limited to Examples. The evaluation was carried out in a manner shown below.

### (Brine Electrolysis Test by Ion Exchange Membrane method)

A brine electrolysis test by an ion exchange membrane method was conducted using a small electrolytic cell, and a hydrogen overvoltage was measured. The test cathode cut into a size 48 mm x 58 mm was fixed on a nickel expanded base. Two holes were bored for fixing the cathode to the small electrolytic cell with nickel screws. A platinum wire coated with PFA (tetrafluoroethylene perfluoroalkylvynyl ether copolymer), with the platinum portion exposed 1 mm or so, was fixed to a side of the cathode surface that faces the ion exchange member to be used as a reference electrode. DSA was used as the anode. Electrolysis was performed in a state in which the anode cell and the cathode cell were separated by the ion exchange membrane with rubber gaskets made of EPDM (ethylene-propylene-diene). "Aciplex" (registered trademark) F6801 (manufactured by Asahi Kasei Chemicals Corporation) was used as the ion exchange membrane. The anode and the ion exchange membrane were brought into intimate contact, while the cathode was 2 mm spaced apart from the ion exchange membrane.

The solution concentrations in the anode and cathode tanks were adjusted such that the salt water concentration in the anode chamber was 205 g/L and the sodium hydroxide concentration in the cathode chamber was 32 wt%. The temperatures in the anode and cathode tanks were controlled so that the temperature in the electrolytic cell was 90°C. Electrolysis was conducted for seven days at a constant electrolysis current density of 4 kA/m². The hydrogen overvoltage was calculated seven days after the start of electrolysis by subtracting the voltage (derived from the liquid resistance and the structural resistance) between the reference electrode (platinum wire) and the cathode from the voltage between the test cathode and the platinum wire used as the reference electrode. The voltage between the reference electrode and the cathode was obtained by a current interrupter method. The voltage between the reference electrode and the cathode was measured by cutting off current instantaneously using a current pulse generator (manufactured by Hokuto Denko Corporation, HC114) as a rectifier for electrolysis and observing the wave pattern with an analyzing recorder or the like.

### (Reverse Current Resistance Test)

Evaluation of resistance to reverse current was conducted through the following procedure.

A test cathode cut in 3 cm × 3 cm was fixed to a nickel rod coated with PTFE with nickel screws. Positive electrolysis was carried out in an aqueous solution of 32 wt% sodium hydroxide at 80 °C at an electrolysis current density of 12 kA/m² for one hour using a platinum plate as a counter electrode so that the test cathode generated hydrogen, and reverse electrolysis was thereafter carried out at a current density of 0.05 kA/m² for one hour. This cycle was successively repeated 12 times. That is, positive electrolysis at 12 kA/m² was repeated 12 times, and reverse electrolysis at 0.05 kA/m² was repeated 12 times.

After the test, the test cathode was taken out, washed with pure water all day and night, and dried fully at 50°C. Thereafter, XRF (X-ray fluorescence) of platinum was measured. The remaining amount of the platinum component between before and after electrolysis was calculated based on the difference from XRF of platinum of the test cathode before the evaluation. In the XRF measurement, Niton XL3t-800 from Thermo Scientific was used, and measurement was performed as follows. A 20 mm square window was opened on a top surface of a hollow box made of stainless steel (with a lead lining, a depth of 100 mm), and the 3 cm square test cathode was placed so as to cover the window. Niton XL3t-800 was placed such that X-ray irradiation hole was located on the center of the test cathode. XRF measurement was performed for 30 seconds to measure a weight percentage of platinum of the test cathode.

### (Iron Ion Resistance Evaluation)

In the evaluation of resistance to iron ions in the electrolytic solution, a cathode overvoltage was measured using a small cell described below. The test cathode was cut in a size of 95 mm in height and 110 mm in width and folded about 2 mm at right angles along four sides. A mat woven with nickel fine wires was put on a nickel expanded metal current collector fixed to the cathode cell, and the folded test cathode was put on the mat such that the folded parts face the collector and the mat. The four corners of the test cathode were fixed to the collector with a string made of Teflon (registered trademark). DSA was used as an anode, in which ruthenium oxide, iridium oxide and titanium oxide were formed on a titanium substrate. Electrolysis was performed in a state in which the anode cell and the cathode cell were separated by the ion exchange membrane with rubber gaskets made of EPDM (ethylene-propylene-diene). "Aciplex" (registered trademark) F6801 (manufactured by Asahi Kasei Chemicals Corporation) was used as the ion exchange membrane. Electrolysis was performed with the anode, the ion exchange membrane, and the cathode in intimate contact (zero-gap electrolysis). The solution concentrations in the anode and cathode tanks were adjusted such that the salt water concentration in the anode chamber was 205 g/L and the sodium hydroxide concentration in the cathode chamber was 32 wt%. The temperatures in the anode and cathode tanks were controlled so that the temperature in the electrolytic cell was 90°C. The iron ion concentration in the cathode chamber was adjusted to 1.5 ppm by adding iron chloride into the cathode chamber. The electrolysis was continued for 90 days. In order to compare the effects of iron ions, electrolysis was performed at the same time using another small cell as a comparative reference under the same electrolysis conditions except that iron chloride was not added to the cathode chamber. The iron ion concentration in the cathode chamber with no addition of iron chloride was 0.1 ppm or less. The overvoltage difference between these cells was obtained after the electrolysis was continued for 90 days, assuming that the overvoltage difference between those cells immediately after the addition of iron ions was zero.

### [Example 1]

A woven mesh substrate in which a nickel fine wire having a diameter of 0.15 mm was woven with a 485 µm aperture size (40-mesh opening) was used as a conductive substrate. The substrate was blasted with alumina powder with a weight average particle size of 100 µm or less and then subjected to acid treatment in 6N hydrochloric acid at room temperature for five minutes, followed by washing with water and drying.

Subsequently, the first coating liquid was prepared by mixing a palladium nitrate solution (manufactured by Tanaka Kikinzoku Kogyo K.K., palladium concentration: 100 g/L) and a dinitrodiammine platinum nitric acid solution (manufactured by Tanaka Kikinzoku Kogyo K.K., platinum concentration: 100 g/L) so that a molar ratio between palladium and platinum was 1:1.

A tray containing the first coating liquid was placed at the lowest part of a coating roll, and the coating roll made of EPDM was impregnated with the coating liquid. A roll was placed above so that the roll and the coating liquid were always in contact, and another roller made of PVC was further placed on the roll. The coating liquid was thus applied on the conductive substrate (the roll method). Before the coating liquid dried, the conductive substrate was quickly passed between two EPDM sponge rolls to absorb and remove the accumulated coating liquid in the intersections of the mesh of the conductive substrate. Subsequently, after a coating film was formed by drying at 50°C for 10 minutes, calcination was performed at 500°C for 10 minutes using a Muffle furnace (KM-600, manufactured by Advantech Co., Ltd.) to thermally decompose the coating film. A cycle of roll coating, drying, and thermal decomposition was repeated twice to form the first layer.

Then, the second coating liquid was prepared by mixing a chloroiridic acid solution (manufactured by Tanaka Kikinzoku Kogyo K.K., iridium concentration: 100 g/L) and a dinitrodiammine platinum nitric acid solution (manufactured by Tanaka Kikinzoku Kogyo K.K., platinum concentration: 100 g/L) so that a molar ratio between iridium and platinum was 0.73 : 0.27. With the roll method in a similar manner as in the first layer, the second coating liquid was applied onto the substrate forming the first layer thereon, then dried and thermally decomposed. The drying temperature was 50°C. The thermal decomposition temperature was 500°C. This cycle was repeated twice to form the second layer. Then, post-heating was performed in the air atmosphere at 500°C for one hour. The test cathode was thus produced.

The result of the brine electrolysis test by the ion exchange membrane method is shown in Table 1. The hydrogen overvoltage at 4 kA/m² was 92 mV, showing that a cathode with a low hydrogen overvoltage was obtained. As a result of the reverse current resistance test, the amount of platinum in the cathode after the test was 95% of the amount of platinum before the test, showing that a cathode resistant to reverse current was obtained.

### [Example 2]

The cathode was prepared and evaluated in the same way as in Example 1 except that coating of the first layer was performed once and coating of the second layer was performed four times. The amount of platinum included in this test cathode was about 1.03 times that of the test cathode in Example 1.

As shown in Table 1, as a result of the brine electrolysis test by the ion exchange membrane method, the hydrogen overvoltage at 4 kA/m² was 92 mV, showing that a cathode with a low hydrogen overvoltage was obtained. As a result of the reverse current resistance test, the amount of platinum in the cathode after the test was 97% of the amount of platinum before the test, showing that a cathode resistant to reverse current was obtained.

### [Example 3]

The cathode was prepared and evaluated in the same way as in Example 1 except that coating of the first layer was performed twice and coating of the second layer was performed four times. The amount of platinum included in this test cathode was about 1.39 times that of the test cathode in Example 1.

As shown in Table 1, as a result of the brine electrolysis test by the ion exchange membrane method, the hydrogen overvoltage at 4 kA/m² was 94 mV, showing that a cathode with a low hydrogen overvoltage was obtained. As a result of the reverse current resistance test, the amount of platinum in the cathode after the test was 96% of the amount of platinum before the test, showing that a cathode resistant to reverse current was obtained.

### [Example 4]

The cathode was prepared and evaluated in the same way as in Example 1 except that coating of the first layer was performed twice and coating of the second layer was performed six times. The amount of platinum included in this test cathode was about 1.45 times that of the test cathode in Example 1.

As shown in Table 1, as a result of the brine electrolysis test by the ion exchange membrane method, the hydrogen overvoltage at 4 kA/m² was 91 mV, showing that a cathode with a low hydrogen overvoltage was obtained. As a result of the reverse current resistance test, the amount of platinum in the cathode after the test was 95% of the amount of platinum before the test, showing that a cathode resistant to reverse current was obtained.

### [Example 5]

The cathode was prepared and evaluated in the same way as in Example 1 except that coating of the first layer was performed three times and coating of the second layer was performed six times. The amount of platinum included in this test cathode was about 2.1 times that of the test cathode in Example 1.

As shown in Table 1, as a result of the brine electrolysis test by the ion exchange membrane method, the hydrogen overvoltage at 4 kA/m² was 93 mV, showing that a cathode with a low hydrogen overvoltage was obtained. As a result of the reverse current resistance test, the amount of platinum in the cathode after the test was 98% of the amount of platinum before the test, showing that a cathode resistant to reverse current was obtained.

### [Example 6]

The cathode was prepared and evaluated in the same way as in Example 3 except that the molar ratio between iridium and platinum in the second coating liquid was 0.80 : 0.20. The amount of platinum included in this test cathode was about 0.92 times that of the test cathode in Example 1.

As shown in Table 1, as a result of the brine electrolysis test by the ion exchange membrane method, the hydrogen overvoltage at 4 kA/m² was 98 mV, showing that a cathode with a low hydrogen overvoltage was obtained. As a result of the reverse current resistance test, the amount of platinum in the cathode after the test was 98% of the amount of platinum before the test, showing that a cathode resistant to reverse current was obtained.

### [Example 7]

The cathode was prepared and evaluated in the same way as in Example 3 except that the molar ratio between iridium and platinum in the second coating liquid was 0.60 : 0.40. The amount of platinum included in this test cathode was about 2.49 times that of the test cathode in Example 1.

As shown in Table 1, as a result of the brine electrolysis test by the ion exchange membrane method, the hydrogen overvoltage at 4 kA/m² was 96 mV, showing that a cathode with a low hydrogen overvoltage was obtained. As a result of the reverse current resistance test, the amount of platinum in the cathode after the test was 95% of the amount of platinum before the test, showing that a cathode resistant to reverse current was obtained.

### [Example 8]

The cathode was prepared and evaluated in the same way as in Example 2 except that the molar ratio between palladium and platinum in the first coating liquid was 0.2 : 0.8. The amount of platinum included in this test cathode was about 1.71 times that of the test cathode in Example 1.

As shown in Table 1, as a result of the brine electrolysis test by the ion exchange membrane method, the hydrogen overvoltage at 4 kA/m² was 99 mV, showing that a cathode with a low hydrogen overvoltage was obtained. As a result of the reverse current resistance test, the amount of platinum in the cathode after the test was 98% of the amount of platinum before the test, showing that a cathode resistant to reverse current was obtained.

### [Example 9]

The cathode was prepared and evaluated in the same way as in Example 3 except that the molar ratio between palladium and platinum in the first coating liquid was 0.4 : 0.6. The amount of platinum included in this test cathode was about 2.22 times that of the test cathode in Example 1.

As shown in Table 1, as a result of the brine electrolysis test by the ion exchange membrane method, the hydrogen overvoltage at 4 kA/m² was 97 mV, showing that a cathode with a low hydrogen overvoltage was obtained. As a result of the reverse current resistance test, the amount of platinum in the cathode after the test was 93% of the amount of platinum before the test, showing that a cathode resistant to reverse current was obtained.

### [Example 10]

A woven mesh substrate in which a nickel fine wire having a diameter of 0.15 mm was woven with a 485 µm aperture size (40-mesh opening) was used as a conductive substrate. The substrate was blasted with alumina powder with a weight average particle size of 100 µm or less and then subjected to acid treatment in 6N hydrochloric acid at room temperature for five minutes, followed by washing with water and drying.

A palladium nitrate solution (manufactured by Tanaka Kikinzoku Kogyo K.K., palladium concentration: 100 g/L) and a dinitrodiammine platinum nitric acid solution (manufactured by Tanaka Kikinzoku Kogyo K.K., platinum concentration: 100 g/L) were mixed so that a molar ratio between palladium and platinum was 1:1. The mixture was then diluted by a factor of two with Japanese Pharmacopoeia purified water so that the total concentration of palladium and platinum was 50 g/L. The first coating liquid was thus prepared.

A tray containing the first coating liquid was placed at the lowest part of a coating roll, and the coating roll made of EPDM was impregnated with the coating liquid. A roll was placed above so that the roll and the coating liquid were always in contact, and another roller made of PVC was further placed on the roll. The coating liquid was thus applied on the conductive substrate (the roll method). Before the coating liquid dried, the conductive substrate was quickly passed between two EPDM sponge rolls to absorb and remove the accumulated coating liquid in the intersections of the mesh of the conductive substrate. Subsequently, after a coating film was formed by drying at 50°C for 10 minutes, calcination was performed at 500°C for 10 minutes using a Muffle furnace (KM-600, manufactured by Advantech Co., Ltd.) to thermally decompose the coating film. A cycle of roll coating, drying and thermal decomposition was repeated four times to form the first layer.

Then, a chloroiridic acid solution (manufactured by Tanaka Kikinzoku Kogyo K.K., iridium concentration: 100 g/L) and a dinitrodiammine platinum nitric acid solution (manufactured by Tanaka Kikinzoku Kogyo K.K., platinum concentration: 100 g/L) were mixed so that a molar ratio between iridium and platinum was 0.73 : 0.27. The mixture was then diluted by a factor of two with Japanese Pharmacopoeia purified water so that the total concentration of iridium and platinum was 50 g/L. The second coating liquid was thus prepared. With the roll method in a similar manner as in the first layer, the second coating liquid was applied onto the substrate forming the first layer thereon, then dried and thermally decomposed. The drying temperature was 50°C. The thermal decomposition temperature was 500°C. This cycle was repeated eight times to form the second layer. Then, post-heating was performed in the air atmosphere at 500°C for one hour. The test cathode was thus prepared. The amount of platinum included in this test cathode was about 1.39 times that of the test cathode in Example 1.

As shown in Table 1, as a result of the brine electrolysis test by the ion exchange membrane method, the hydrogen overvoltage at 4 kA/m² was 95 mV, showing that a cathode with a low hydrogen overvoltage was obtained. As a result of the reverse current resistance test, the amount of platinum in the cathode after the test was 93% of the amount of platinum before the test, showing that a cathode resistant to reverse current was obtained.

Iron ion resistance evaluation was also conducted using the cathode of this example. The overvoltage difference after 90 days was 1 mV, clearly showing that the cathode was not affected by iron ions.

### [Example 11] (not according to the invention)

A woven mesh substrate in which a nickel fine wire having a diameter of 0.15 mm was woven with a 485 µm aperture size (40-mesh opening) was used as a conductive substrate. The substrate was blasted with alumina powder with a weight average particle size of 100 µm or less and then subjected to acid treatment in 6N hydrochloric acid at room temperature for five minutes, followed by washing with water and drying.

Then, a palladium nitrate solution (manufactured by Tanaka Kikinzoku Kogyo K.K., palladium concentration: 100 g/L) and a dinitrodiammine platinum nitric acid solution (manufactured by Tanaka Kikinzoku Kogyo K.K., platinum concentration: 100 g/L) were mixed so that a molar ratio between palladium and platinum was 1:1. The first coating liquid was thus prepared.

A tray containing the first coating liquid was placed at the lowest part of a coating roll, and the coating roll made of EPDM was impregnated with the coating liquid. A roll was placed above so that the roll and the coating liquid were always in contact, and another roller made of PVC was further placed on the roll. The coating liquid was thus applied on the conductive substrate (the roll method). Before the coating liquid dried, the conductive substrate was quickly passed between two EPDM sponge rolls to absorb and remove the accumulated coating liquid in the intersections of the mesh of the conductive substrate. Subsequently, after a coating film was formed by drying at 50°C for 10 minutes, calcination was performed at 500°C for 10 minutes using a Muffle furnace (KM-600, manufactured by Advantech Co., Ltd.) to thermally decompose the coating film. A cycle of roll coating, drying and thermal decomposition was repeated twice to form the first layer.

The second coating liquid was prepared by dissolving 1 g of iridium chloride crystals (Wako Pure Chemical Industries, Ltd.) and 1 g of chloroplatinic acid crystals in a mixed solvent of turpentine oil (5 ml), anise oil (20 ml) and ethanol (15 ml). The molar ratio between platinum and iridium was 0.39 : 0.61. With the roll method in a similar manner as in the first layer, the second coating liquid was applied onto the substrate forming the first layer thereon, then dried and thermally decomposed. The drying temperature was 120°C. The thermal decomposition temperature was 450°C. This cycle was repeated until the thickness of the second layer reached 0.5 µm or more to form the second layer. The test cathode was thus prepared. The amount of platinum included in this test cathode was about 1.61 times that of the test cathode in Example 1.

The result of the brine electrolysis test by the ion exchange membrane method is shown in Table 1. The hydrogen overvoltage at 4 kA/m² was 93 mV. As a result of the reverse current resistance test, the amount of platinum in the test cathode after the test was 82% of the amount of platinum before the test.

### [Comparative Example 1]

A woven mesh substrate in which a nickel fine wire having a diameter of 0.15 mm was woven with a 485 µm aperture size (40-mesh opening) was used as a conductive substrate. The substrate was blasted with alumina powder with a weight average particle size of 100 µm or less and then subjected to acid treatment in 6N hydrochloric acid at room temperature for five minutes, followed by washing with water and drying.

The coating liquid was prepared by mixing a chloroiridic acid solution (manufactured by Tanaka Kikinzoku Kogyo K.K., iridium concentration: 100 g/L) and a dinitrodiammine platinum nitric acid solution (manufactured by Tanaka Kikinzoku Kogyo K.K., platinum concentration: 100 g/L) so that a molar ratio between iridium and platinum was 0.61 : 0.39.

A tray containing the coating liquid was placed at the lowest part of a coating roll, and the coating roll made of EPDM was impregnated with the coating liquid. A roll was placed above so that the roll and the coating liquid were always in contact, and another roller made of PVC was further placed on the roll. The coating liquid was thus applied on the conductive substrate (the roll method). Before the coating liquid dried, the conductive substrate was quickly passed between two EPDM sponge rolls to absorb and remove the accumulated coating liquid in the intersections of the mesh of the conductive substrate. Subsequently, after a coating film was formed by drying at 50°C for 10 minutes, calcination was performed at 450°C for 10 minutes using a Muffle furnace (KM-600, manufactured by Advantech Co., Ltd.) to thermally decompose the coating film. Roll coating, drying and thermal decomposition were repeated 12 times. The test cathode was thus prepared. The amount of platinum included in this test cathode was about 2.22 times that of the test cathode in Example 1.

The result of the brine electrolysis test by the ion exchange membrane method is shown in Table 1. The hydrogen overvoltage at 4 kA/m² was 90 mV. As a result of the reverse current resistance test, the amount of platinum in the cathode after the test was 27% of the amount of platinum before the test, showing that the resistance to reverse current was not sufficient.

### [Comparative Example 2]

A woven mesh substrate in which a nickel fine wire having a diameter of 0.15 mm was woven with a 485 µm aperture size (40-mesh opening) was used as a conductive substrate. The substrate was blasted with alumina powder with a weight average particle size of 100 µm or less and then subjected to acid treatment in 6N hydrochloric acid at room temperature for five minutes, followed by washing with water and drying.

Then, the coating liquid was prepared by mixing a palladium nitrate solution (manufactured by Tanaka Kikinzoku Kogyo K.K., palladium concentration: 100 g/L) and a dinitrodiammine platinum nitric acid solution (manufactured by Tanaka Kikinzoku Kogyo K.K., platinum concentration: 100 g/L) so that a molar ratio between palladium and platinum was 1:1.

A tray containing the coating liquid was placed at the lowest part of a coating roll, and the coating roll made of EPDM was impregnated with the coating liquid. A roll was placed above so that the roll and the coating liquid were always in contact, and another roller made of PVC was further placed on the roll. The coating liquid was thus applied on the conductive substrate (the roll method). Before the coating liquid dried, the conductive substrate was quickly passed between two EPDM sponge rolls to absorb and remove the accumulated coating liquid in the intersections of the mesh of the conductive substrate. Subsequently, after a coating film was formed by drying at 50°C for 10 minutes, calcination was performed at 500°C for 10 minutes using a Muffle furnace (KM-600, manufactured by Advantech Co., Ltd.) to thermally decompose the coating film. Roll coating, drying and thermal decomposition were repeated twice respectively. The test cathode was thus prepared. The amount of platinum included in this test cathode was about 0.72 times that of the test cathode in Example 1.

The result of the brine electrolysis test by the ion exchange membrane method is shown in Table 1. The hydrogen overvoltage at 4 kA/m² was 161 mV, showing that the hydrogen overvoltage was high although a large amount of platinum was included. As a result of the reverse current resistance test, the amount of platinum in the cathode after the test was 95% of the amount of platinum before the test.

### [Comparative Example 3]

A woven mesh substrate in which a nickel fine wire having a diameter of 0.15 mm was woven with a 485 µm aperture size (40-mesh opening) was used as a conductive substrate. The substrate was blasted with alumina powder with a weight average particle size of 100 µm or less and then subjected to acid treatment in 6N hydrochloric acid at room temperature for five minutes, followed by washing with water and drying.

Then, the coating liquid was prepared by mixing a chloroiridic acid solution (manufactured by Tanaka Kikinzoku Kogyo K.K., iridium concentration: 100 g/L) and a dinitrodiammine platinum nitric acid solution (manufactured by Tanaka Kikinzoku Kogyo K.K., platinum concentration: 100 g/L) so that a molar ratio between iridium and platinum was 0.73 : 0.27.

A tray containing the coating liquid was placed at the lowest part of a coating roll, and the coating roll made of EPDM was impregnated with the coating liquid. A roll was placed above so that the roll and the coating liquid were always in contact, and another roller made of PVC was further placed on the roll. The coating liquid was thus applied on the conductive substrate (the roll method). Before the coating liquid dried, the conductive substrate was quickly passed between two EPDM sponge rolls to absorb and remove the accumulated coating liquid in the intersections of the mesh of the conductive substrate. Subsequently, after a coating film was formed by drying at 50°C for 10 minutes, calcination was performed at 500°C for 10 minutes using a Muffle furnace (KM-600, manufactured by Advantech Co., Ltd.) to thermally decompose the coating film. Roll coating, drying and thermal decomposition were repeated six times to form the first layer.

Then, the coating liquid was prepared by mixing a palladium nitrate solution (manufactured by Tanaka Kikinzoku Kogyo K.K., palladium concentration: 100 g/L) and a dinitrodiammine platinum nitric acid solution (manufactured by Tanaka Kikinzoku Kogyo K.K., platinum concentration: 100 g/L) so that a molar ratio between palladium and platinum was 1:1. With the roll method in a similar manner as in the first layer, applying the coating liquid onto the substrate forming the first layer thereon, then drying and thermal decomposition were performed twice. The second layer was formed at a drying temperature of 50°C and a thermal decomposition temperature of 500°C. Post-heating was performed in the air atmosphere at 500°C for one hour. The test cathode was thus prepared. The amount of platinum included in this test cathode was about 1.45 times that of the test cathode in Example 1.

The result of the brine electrolysis test by the ion exchange membrane method is shown in Table 1. The hydrogen overvoltage at 4 kA/m² was 97 mV. As a result of the reverse current resistance test, the amount of platinum in the cathode after the test was 81 % of the amount of platinum before the test, showing that the resistance to reverse current was not sufficient.

### [X-ray Diffraction Measurement]

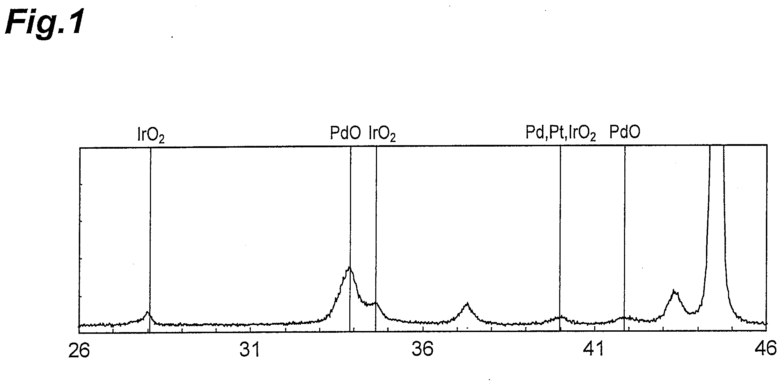

The results of X-ray diffraction measurement of the cathodes used in Examples and Comparative Examples are shown in Fig. 1 to Fig. 3.

Fig. 1 shows the result of X-ray diffraction peaks of the cathodes obtained from Example 1. The diffraction peaks of iridium oxide are observed in the vicinity of 28° and 34.7°. The diffraction peaks of palladium oxide are observed in the vicinity of 33.9° and 42°. At the peak observed in the vicinity of 40°, the diffraction peaks of palladium as a simple substance, platinum as a simple substance, and iridium oxide are deemed to overlap one another.

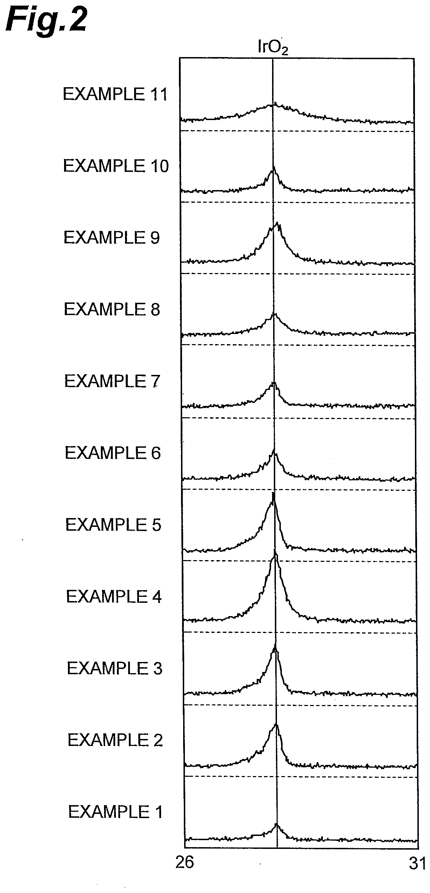

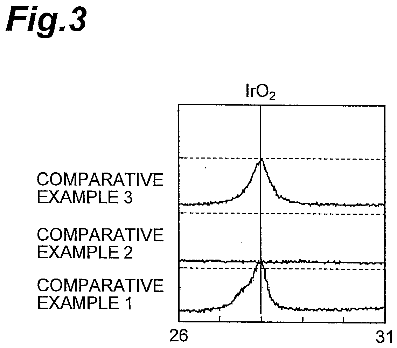

Fig. 2 and Fig. 3 show the results of X-ray diffraction peaks in the vicinity of 2θ = 28° of the cathodes used in Examples and Comparative Examples. The measurement results of full width at half maximum at 2θ = 28° based on these results are shown in Table 1.

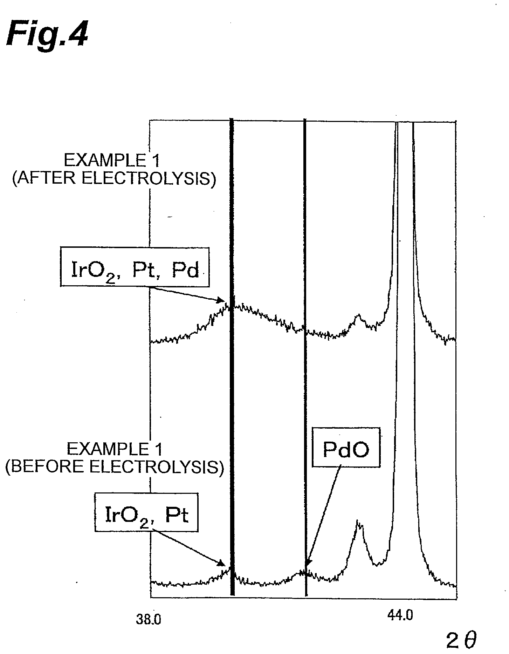

Fig. 4 shows the results of X-ray diffraction measurement before and after electrolysis of the cathode used in Example 1. Before electrolysis, the diffraction peaks of iridium oxide and platinum as a simple substance are observed in the vicinity of 40°, and the diffraction peak of palladium oxide is observed in the vicinity of 42°. It can be understood that after electrolysis, the diffraction peak of palladium oxide disappears, and the intensity of the diffraction peak in the vicinity of 40° becomes higher. This may suggest that palladium oxide is partially reduced by electrolysis to become palladium as a simple substance (the diffraction peak is 40.1 °). The diffraction peak in the vicinity of 40° has a shoulder in a high angle region. This may suggest that iridium oxide (the diffraction peak is 40°) was reduced to iridium (the diffraction peak is 40.7°) and iridium-platinum alloy was sufficiently formed.

**[Table 1]**

| | first layer | | second layer | | total Pt amount in catalyst layer | hydrogen overvoltage (4 kA/m²) | Pt remaining ratio (%) after reverse current resistance evaluation | 2θ=28° X-ray full width at half maximum (°) |
|---|---|---|---|---|---|---|---|---|
| | composition and molar ratio | number of times of coating | composition and molar ratio | number of times of coating | | | | |
| Example 1 | Pd:Pt=50:50 | 2 | Ir:Pt=73:27 | 2 | 1.00 | 92 | 95 | 0.26 |
| Example 2 | Pd:Pt=50:50 | 1 | Ir:Pt=73:27 | 4 | 1.03 | 92 | 97 | 0.31 |
| Example 3 | Pd:Pt=50:50 | 2 | Ir:Pt=73:27 | 4 | 1.39 | 94 | 96 | 0.28 |
| Example 4 | Pd:Pt=50:50 | 2 | Ir:Pt=73:27 | 6 | 1.45 | 91 | 95 | 0.41 |
| Example 5 | Pd:Pt=50:50 | 3 | Ir:Pt=73:27 | 6 | 2.10 | 93 | 98 | 0.319 |
| Example 6 | Pd:Pt 50:50 | 2 | Ir:Pt=80:20 | 4 | 0.92 | 98 | 98 | 0.3 |
| Example 7 | Pd:Pt=50:50 | 2 | Ir:Pt=60:40 | 4 | 2.49 | 96 | 95 | 0.38 |
| Example 8 | Pd:Pt=20:80 | 1 | Ir:Pt=73:27 | 4 | 1.71 | 99 | 98 | 0.41 |
| Example 9 | Pd:Pt=40:60 | 2 | Ir:Pt=73:27 | 4 | 2.22 | 97 | 93 | 0.27 |
| Example 10 | Pd:Pt=50:50 | 4 | Ir:Pt=73:27 | 8 | 1.39 | 95 | 93 | 0.521 |
| Example 11* | Pd:Pt=50:50 | 2 | Ir:Pt=69:31 | 6 | 1.61 | 93 | 82 | 1.34 |
| Comparative Example 1 | Ir:Pt=61:39 | 12 | - | - | 2.22 | 90 | 27 | 0.594 |
| Comparative Example 2 | Pd:Pt=50:50 | 2 | - | - | 0.72 | 161 | 95 | - |
| Comparative Example 3 | Ir:Pt=73:27 | 6 | Pd:Pt=50:50 | 2 | 1.45 | 97 | 81 | 0.585 |

| | | | | | | | | |
|---|---|---|---|---|---|---|---|---|
| *not according to the invention | | | | | | | | |

### Industrial Applicability

The cathode of the present invention is suitably used in electrolysis of water or an aqueous alkali metal compound solution, specifically, in the field of the industry of a brine alkali electrolysis by an ion exchange membrane.

### Reference Signs List

10 conductive substrate, 20 first layer, 30 second layer, 100 cathode, 210 electrolytic solution, 220 container, 230 anode, 240 cathode, 250 ion exchange membrane, 260 wiring, 200 electrolytic cell for electrolysis.

## Claims

1. A cathode comprising a conductive substrate and a catalyst layer formed on the conductive substrate, wherein:
the catalyst layer comprises a first layer and a second layer,
the first layer at least includes palladium element and platinum element,
the second layer at least includes iridium element and platinum element,
the first layer is located on the conductive substrate, and
the second layer is located on the first layer;
wherein the second layer includes iridium oxide and platinum as a simple substance; and
wherein in an X-ray powder diffraction measurement, a full width at half maximum of a diffraction peak of iridium oxide is 1° or less in an angle region including 2θ = 28°.

2. The cathode according to Claim 1, wherein the second layer further includes iridium-platinum alloy.

3. The cathode according to any one of Claims 1 or 2, wherein the second layer is structured such that iridium oxide supports platinum as a simple substance or iridium-platinum alloy.

4. The cathode according to any one of Claims 1 to 3, wherein the first layer includes platinum as a simple substance.

5. The cathode according to any one of Claims 1 to 4, wherein the first layer includes palladium oxide and/or palladium as a simple substance.

6. The cathode according to any one of Claims 1 to 5, wherein a thickness of the first layer is 0.01 µm to 5 µm, and a thickness of the second layer is 0.01 µm to 5 µm.

7. The cathode according to any one of Claims 1 to 6, wherein the conductive substrate includes nickel.

8. The cathode according to any one of claims 1 to 7, wherein the first layer includes an alloy of palladium and platinum, or platinum as a simple substance and palladium as a simple substance.

9. An electrolytic cell for electrolysis of an alkali metal chloride, comprising the cathode according to any one of Claims 1 to 8.

10. A method for producing a cathode as defined in claim 1, said method comprising:
a coating step of applying a first coating liquid including a palladium compound and a platinum compound, onto a conductive substrate;
a film formation step of forming a coating film by drying the first coating liquid;
a thermal decomposition step of heating and thermally decomposing the coating film to form a first layer, and thereafter;
a coating step of applying a second coating liquid including an iridium compound and a platinum compound, onto the first layer;
a film formation step of forming a coating film by drying the second coating liquid; and
a thermal decomposition step of heating and thermally decomposing the coating film at a temperature of 470 °C or higher and 550 °C or lower to form a second layer.

11. The method for producing a cathode according to Claim 10, wherein the first coating liquid and the second coating liquid include an organic acid having a valence of two or more and an organic compound having two or more hydroxyl groups.

12. The method for producing a cathode according to Claim 10 or 11, wherein in the thermal decomposition step, a rate of temperature increase from a drying temperature in the film formation step to a heating temperature in the thermal decomposition step is 10°C/min to 1500°C/min.

13. The method for producing a cathode according to any one of Claims 10 to 12, wherein a cycle including the coating step, the film formation step, and the thermal decomposition step is repeated twice or more to form the first layer and/or the second layer.

14. The method for producing a cathode according to any one of Claims 10 to 13, wherein post-heating is performed after forming the second layer.

15. The method for producing a cathode according to any one of Claims 10 to 14, further comprising an electrolysis step of electrolyzing after forming the second layer.

16. The method for producing a cathode according to any one of Claims 10 to 15, wherein the palladium compound in the first coating liquid is palladium forming an ammine complex or a nitrate of palladium, and
the platinum compound in the first coating liquid is a platinum compound forming an ammine complex.

17. The method for producing a cathode according to any one of Claims 10 to 16, wherein the iridium compound in the second coating liquid is a chloride of iridium, and
the platinum compound in the second coating liquid is a chloride or platinum forming an ammine complex.

## Patentansprüche

1. Kathode, die ein leitfähiges Substrat und eine auf dem leitfähigen Substrat gebildete Katalysatorschicht umfasst, wobei:
die Katalysatorschicht eine erste Schicht und eine zweite Schicht umfasst,
die erste Schicht das Element Palladium und das Element Platin wenigstens umfasst,
die zweite Schicht das Element Iridium und das Element Platin wenigstens umfasst,
sich die erste Schicht auf dem leitfähigen Substrat befindet und
sich die zweite Schicht auf der ersten Schicht befindet;
wobei die zweite Schicht Iridiumoxid und Platin als einfache Substanz umfasst; und
wobei in einer Röntgenpulverbeugungsmessung die Halbwertsbreite eines Beugungsreflexes von Iridiumoxid in einem Winkelbereich, der 2θ = 28° umfasst, 1° oder weniger beträgt.

2. Kathode gemäß Anspruch 1, wobei die zweite Schicht weiterhin eine Iridium-Platin-Legierung umfasst.

3. Kathode gemäß einem der Ansprüche 1 oder 2, wobei die zweite Schicht so strukturiert ist, dass Iridiumoxid als Träger für Platin als einfache Substanz oder eine Iridium-Platin-Legierung dient.

4. Kathode gemäß einem der Ansprüche 1 bis 3, wobei die erste Schicht Platin als einfache Substanz umfasst.

5. Kathode gemäß einem der Ansprüche 1 bis 4, wobei die erste Schicht Palladiumoxid und/oder Palladium als einfache Substanz umfasst.

6. Kathode gemäß einem der Ansprüche 1 bis 5, wobei die Dicke der ersten Schicht 0,01 µm bis 5 µm beträgt und die Dicke der zweiten Schicht 0,01 µm bis 5 µm beträgt.

7. Kathode gemäß einem der Ansprüche 1 bis 6, wobei das leitfähige Substrat Nickel umfasst.

8. Kathode gemäß einem der Ansprüche 1 bis 7, wobei die erste Schicht eine Legierung von Palladium und Platin oder Platin als einfache Substanz und Palladium als einfache Substanz umfasst.

9. Elektrolysezelle für die Elektrolyse eines Alkalimetallchlorids, umfassend die Kathode gemäß einem der Ansprüche 1 bis 8.

10. Verfahren zur Herstellung einer Kathode gemäß Anspruch 1, wobei das Verfahren umfasst:
einen Beschichtungsschritt zum Auftragen einer ersten Beschichtungsflüssigkeit, die eine Palladiumverbindung und eine Platinverbindung umfasst, auf ein leitfähiges Substrat;
einen Filmbildungsschritt zur Bildung eines Beschichtungsfilms durch Trocknen der ersten Beschichtungsflüssigkeit;
einen thermischen Zersetzungsschritt zum Erhitzen und thermischen Zersetzen des Beschichtungsfilms unter Bildung einer ersten Schicht und danach
einen Beschichtungsschritt zum Auftragen einer zweiten Beschichtungsflüssigkeit, die eine Iridiumverbindung und eine Platinverbindung umfasst, auf die erste Schicht;
einen Filmbildungsschritt zur Bildung eines Beschichtungsfilms durch Trocknen der zweiten Beschichtungsflüssigkeit; und
einen thermischen Zersetzungsschritt zum Erhitzen und thermischen Zersetzen des Beschichtungsfilms bei einer Temperatur von 470 °C oder darüber und 550 °C oder darunter unter Bildung einer zweiten Schicht.

11. Verfahren zur Herstellung einer Kathode gemäß Anspruch 10, wobei die erste Beschichtungsflüssigkeit und die zweite Beschichtungsflüssigkeit eine organische Säure mit einer Wertigkeit von zwei oder mehr und eine organische Verbindung mit zwei oder mehr Hydroxygruppen umfassen.

12. Verfahren zur Herstellung einer Kathode gemäß Anspruch 10 oder 11, wobei im thermischen Zersetzungsschritt die Geschwindigkeit der Temperaturzunahme von einer Trocknungstemperatur im Filmbildungsschritt auf eine Erhitzungstemperatur im thermischen Zersetzungsschritt 10 °C/min bis 1500 °C/min beträgt.

13. Verfahren zur Herstellung einer Kathode gemäß einem der Ansprüche 10 bis 12, wobei ein Zyklus, der den Beschichtungsschritt, den Filmbildungsschritt und den thermischen Zersetzungsschritt umfasst, zweimal oder öfter wiederholt wird, um die erste Schicht und/oder die zweite Schicht zu bilden.

14. Verfahren zur Herstellung einer Kathode gemäß einem der Ansprüche 10 bis 13, wobei nach der Bildung der zweiten Schicht eine Nacherhitzung durchgeführt wird.

15. Verfahren zur Herstellung einer Kathode gemäß einem der Ansprüche 10 bis 14, das nach der Bildung der zweiten Schicht weiterhin einen Elektrolyseschritt zum Elektrolysieren umfasst.

16. Verfahren zur Herstellung einer Kathode gemäß einem der Ansprüche 10 bis 15, wobei die Palladiumverbindung in der ersten Beschichtungsflüssigkeit Palladium, das einen Amminkomplex bildet, oder ein Nitrat von Palladium ist und die Platinverbindung in der ersten Beschichtungsflüssigkeit eine Platinverbindung, die einen Amminkomplex bildet, ist.

17. Verfahren zur Herstellung einer Kathode gemäß einem der Ansprüche 10 bis 16, wobei die Iridiumverbindung in der zweiten Beschichtungsflüssigkeit ein Chlorid von Iridium ist und die Platinverbindung in der zweiten Beschichtungsflüssigkeit ein Chlorid oder Platin, das einen Amminkomplex bildet, ist.

## Revendications

1. Cathode comprenant un substrat conducteur et une couche catalytique formée sur le substrat conducteur, dans lequel :
la couche catalytique comprend une première couche et une deuxième couche,
la première couche comprend au moins un élément de palladium et un élément de platine,
la deuxième couche comprend au moins un élément d'iridium et un élément de platine,
la première couche est située sur le substrat conducteur, et
la deuxième couche est située sur la première couche ;
la deuxième couche comprenant de l'oxyde d'iridium et de platine en tant que simple substance ; et
une mesure de diffraction des rayons X sur poudre, une largeur entière à la moitié du maximum d'un pic de diffraction d'oxyde d'iridium est de 1° ou moins dans une région angulaire contenant 2θ = 28°.

2. Cathode selon la revendication 1, dans laquelle la deuxième couche comprend en outre un alliage iridium-platine.

3. Cathode selon l'une des revendications 1 ou 2, dans laquelle la deuxième couche est structurée de façon à ce que l'oxyde d'iridium supporte le platine en tant que simple substance ou en tant qu'alliage iridium-platine.

4. Cathode selon l'une des revendications 1 à 3, dans laquelle la première couche contient du platine en tant que simple substance.

5. Cathode selon l'une des revendications 1 à 4, dans laquelle la première couche contient de l'oxyde de palladium et/ou du palladium en tant que simple substance.

6. Cathode selon l'une des revendications 1 à 5, dans laquelle une épaisseur de la première couche est de 0,01 µm à 5 µm, et une épaisseur de la deuxième couche est de 0,01 µm à 5 µm.

7. Cathode selon l'une des revendications 1 à 6, dans laquelle le substrat conducteur contient du nickel.

8. Cathode selon l'une des revendications 1 à 7, dans laquelle la première couche contient un alliage de palladium et de platine ou du platine en tant que simple substance et du palladium en tant que simple substance.

9. Cellule électrolytique pour l'électrolyse d'un chlorure de métal alcalin, comprenant la cathode selon l'une des revendications 1 à 8.

10. Procédé de production d'une cathode selon la revendication 1, ledit procédé comprenant :
une étape de revêtement comprenant l'application d'un premier liquide de revêtement contenant un composé de palladium et un composé de platine sur un substrat conducteur ;
une étape de formation de film comprenant la formation d'un film de revêtement par séchage du premier liquide de revêtement ;
une étape de décomposition thermique comprenant le chauffage et la décomposition thermique du film de revêtement pour former une première couche, puis :
une étape de revêtement comprenant l'application d'un deuxième liquide de revêtement contenant un composé d'iridium et un composé de platine, sur la première couche ;
une étape de formation de film comprenant la formation d'un film de revêtement par séchage du deuxième liquide de revêtement ; et
une étape de décomposition thermique comprenant le chauffage et la décomposition thermique du film de revêtement à une température de 470 °C ou plus et de 550 °C ou moins pour former une deuxième couche.

11. Procédé de production d'une cathode selon la revendication 10, dans lequel le premier liquide de revêtement et le deuxième liquide de revêtement contiennent un acide organique ayant une valence de deux ou plus et un composé organique ayant deux groupes hydroxyles ou plus.

12. Procédé de production d'une cathode selon la revendication 10 ou 11, dans lequel, dans l'étape de décomposition thermique, un taux d'augmentation de température entre une température de séchage dans l'étape de formation de film et une température de chauffage dans l'étape de décomposition thermique est de 10 °C/min à 1500 °C/min.

13. Procédé de production d'une cathode selon l'une des revendications 10 à 12, dans lequel un cycle comprenant l'étape de revêtement, l'étape de formation de film et l'étape de décomposition thermique est répété deux fois ou plus pour former la première couche et/ou la deuxième couche.

14. Procédé de production d'une cathode selon l'une des revendications 10 à 13, dans lequel un post-chauffage est effectué après la formation de la deuxième couche.

15. Procédé de production d'une cathode selon l'une des revendications 10 à 14, comprenant en outre une étape d'électrolyse comprenant une électrolyse après la formation de la deuxième couche.

16. Procédé de production d'une cathode selon l'une des revendications 10 à 15, dans lequel le composé de palladium dans le premier liquide de revêtement est du palladium formant un complexe amine ou un nitrate de palladium, et
le composé de platine dans le premier liquide de revêtement est un composé de platine formant un complexe amine.

17. Procédé de production d'une cathode selon l'une des revendications 10 à 16, dans lequel le composé d'iridium dans le deuxième liquide de revêtement est un chlorure d'iridium, et
le composé de platine dans le deuxième liquide de revêtement est un chlorure ou du platine formant un complexe amine.
